# EUROPEAN PATENT SPECIFICATION

(11) **EP 3 820 320 B1**
(45) Date of publication and mention of the grant of the patent: **28.06.2023**
(21) Application number: 19705170.9
(22) Date of filing: 13.02.2019
(51) Int. Cl.: A42B 3/00, B32B 5/02, B32B 27/12, B32B 27/18, B32B 27/20, B32B 27/32, B32B 27/34, B32B 27/36

(54) **RIGID HOLLOW PROTECTION CASING**
STEIFE HOHLE SCHUTZHÜLLE
BOÎTIER DE PROTECTION CREUX RIGIDE

(30) Priority: 13.07.2018 ES 201831111 U
(43) Date of publication of application: 19.05.2021
(73) Proprietor: Mat Product & Technology, SL, 08223 Terrassa (ES)
(72) Inventor: CADENS BALLARIN, Javier, 08830 Sant Boi de Llobregat (ES); MATEU CODINA, Xavier, 08230 Matadepera (ES)
(74) Representative: Juncosa Miró, Jaime
(86) International application number: PCT/EP2019/053504
(87) International publication number: WO 2020/011404

(56) References cited:
- EP-A1- 0 345 450
- EP-A1- 2 439 068
- WO-A1-2011/073331
- WO-A1-2014/111129
- US-A1- 2010 088 807
- US-B1- 6 468 644
- US-B2- 7 062 795

## Description

### Technical field

The present invention relates to the field of rigid hollow protection casings, such as, for example, protective helmet shells, boots, body armours, knee pads, elbow pads, wrist protectors or even suitcases.

A rigid hollow protection casing is a hard element intended to receive impacts from the outside and to distribute the stresses over a larger area than that of the impact surface, thereby reducing the possible damage that said impact might cause in whatever is housed in its hollow interior. The casing also has other functions, such as, for example, resisting abrasion.

Typically, other layers of softer or deformable material, such as foam or padded elements, intended to absorb as much energy as possible from the impact and to deform to increase the deceleration distance in the case of an accident are sandwiched between the casing and the content of its hollow interior to be protected.

### State of the art

Multiple helmets provided with a shell obtained by an injection moulding process of a thermoplastic material are known, which, thanks to its fluidity, may be easily injected in the mould forming a monolithic shell with a thickness of a few millimetres, having the certainty that the thermoplastic material will completely fill all the nooks and crannies of the mould.

Typically, in the manufacturing of this type of shells, a thermoplastic material is employed that solidifies by the application of heat, so that after the moulding the shell hardens and can be extracted from the mould.

However, this solution does not allow for the inclusion of long reinforcing fibres, given that said long fibres cannot be introduced in the mould by an injection process ensuring its correct distribution.

A manufacturing process of a shell is also known from document EP2808160 that consists in arranging an outer layer formed by a thermoplastic matrix of short fibres and an inner layer formed by a thermoplastic matrix of long reinforcing fibres in the interior of the mould, for the manufacturing of said shell.

However, the described product in that document mentions the existence of an outer layer consisting in a veil formed by said short fibres.

Said short fibres can produce, in the final product, an irregular and uneven surface finish which requires a final sanding and polishing step of the shell, which increases the cost of the product.

Documents US7062795, EP2439068, US6468644B1, WO2011/073331A1 and US2010/088807A1 describe casings made of a matrix of thermoplastic material including long-fibre reinforcements.

Document EP0345450A1 discloses a plastic container for liquids or gases comprising a first layer reinforced with glass fibres and a second layer of a thermoplastic material comprising PP, wherein the first layer comprises PP reinforced with glass fibres and wherein the fibres are long fibres. In addition, this document also discloses a fibre content of 25-80%.

Document WO2014/111129A1 discloses a multilayer composition for manufacturing mechanical or structured parts or articles comprising a surface layer comprising a thermoplastic polymer and a substrate layer comprising a polymeric composite material comprising a fibrous material as reinforcement, wherein the thermoplastic material of the substrate layer comprises PP or PET and the fibres comprise glass fibres or carbon fibres. In addition, this document discloses the use in vehicles, sport articles and wind turbine parts.

### Disclosure of the invention

The present invention relates to a rigid hollow protection casing that protects the contents of its hollow interior from impacts external to the casing.

Thus, the casing is intended to receive and resist impacts or abrasions in the case of an accident, as well as to distribute the stresses produced by said impacts over as large an area as possible in order to reduce the risk of damage to the contents of its interior hollow space, providing protection.

Additionally, the casing may include inside an interior deformable material in charge of increasing the deceleration distance in the case of an impact, and of absorbing as large an amount of energy as possible from the impact by its deformation.

The proposed rigid hollow casing includes:
- a first rigid layer composed of a matrix of a first thermoplastic material, said matrix including in its interior at least one long-fibre fabric layer.

Thermoplastic polymers are less fluidic, and therefore harder to mould, than thermostable polymers, but, on the other hand, display better mechanical properties to impacts, and, for that reason, the rigid hollow casings are typically manufactured from thermoplastic polymers by means of a thermoplastic injection into a mould, which makes lower unit costs possible for large industrial batches/volumes of the same model.

However, the inclusion of long fibres included in the matrix of the first material keeps that the manufacturing of said first layer of the hollow casing from being carried out by means of an injection moulding process, since it would not be possible to ensure a correct distribution of said long-fibre fabric, its correct distribution being critical to ensure a correct resistance of all the sections of the hollow casing.

That is the reason why the inclusion of the long-fibre fabric rules out the injection process, since said long fibres must be precisely distributed in the mould before the hardening of the first material. In spite of ruling out the injection moulding process, the use of thermoplastic materials with better resistant performance of elasticity, resistance and resilience than those of thermostable plastics is proposed.

The long fibres included in the interior of the first thermoplastic matrix offer great resistance, avoiding the rupture of the first thermoplastic matrix in case of impact, and distribute the individual stress impacts over a larger surface of the casing, thereby allowing the attainment of the same or better resistant performances than a casing without long fibres using a lighter casing with less material.

The proposed hollow casing also includes the following features unknown in the state of the art:
- a second overlapping rigid layer exterior to the first layer, the second layer being composed of a matrix of a second thermoplastic material, the second layer comprising between 2% and 10% of the total weight of the casing; and
- said long fibres of the first layer are selected from fibreglass, carbon fibre and/or aramid fibre and comprise between 65% and 45% of the total weight of the first rigid layer.

The second overlapping rigid layer exterior to the first layer offers a complete coating to the first layer that improves its resistance and that also completely smooths out any imperfection that the presence of long fibres may have caused in the exterior surface finish of the first layer, improving its appearance, without the need of further polishing of the casing.

Furthermore, the second rigid layer completely covers any long fibres that might have been left on the surface of the first rigid layer, protecting said long fibres and thereby improving the abrasion resistance properties of the shell.

According to a proposed embodiment, the first thermoplastic material is polypropylene, polyethylene, polyethylene terephthalate or polyamide and the second thermoplastic material is polypropylene, polyethylene, polyethylene terephthalate or polyamide.

Polypropylene is easier to work on and offers good resistant performance, only requiring some common-use additives to improve its melt state fluidity, to improve its resistance to impact and ultraviolet radiation, but, however, it is hard to paint.

On the contrary, polyethylene requires a lower melting point and presents great ease for painting, but requires a more precise composition of the additives to achieve an impact resistance equivalent to that obtained by polypropylene.

The first thermoplastic material and the second thermoplastic material may be the same or different plastic material, since polyethylene, polypropylene and also polyethylene terephthalate are plastics compatible with one another that achieve a correct cohesion between the first and second layers.

It is also contemplated that the first and second employed thermoplastic materials have a different melting point; this makes it possible, during the manufacturing process, for one thermoplastic material to be melted without melting the other one, the latter requiring greater temperature, thereby achieving improved penetration of the melted material between the fibres that compose the other thermoplastic material before this is melted, thereby obtaining a more monolithic and resistant assembly.

This different melting point may be achieved by employing different plastics, or employing the same plastic but with different additives that provide a different melting point to them.

Long-fibre fabrics can be both unwoven fabrics, with their long fibres distributed randomly, and woven fabrics, with their long fibres distributed in an orderly fashion with weft and warp.

According to a contemplated embodiment, the long fibres are sized, that is, that their surface has been treated to increase their roughness, thereby achieving an improved adherence with the thermoplastic matrix.

Additionally, it is also proposed that the first thermoplastic material and/or the second thermoplastic material include graphene particles or fibres in the capacity of dopant, increasing their resistance.

It is also proposed that the first layer include additional reinforcing areas with a number of long-fibre fabric layers larger than the rest of the first layer of the casing.

In the case that the casing is a helmet shell, the additional reinforcing areas will preferably include areas around the visor opening and areas around the access opening of the shell, which, due to their geometry, are weaker than other areas of the shell, or in areas where the required mechanical rigidity or resilience is greater for reasons of regulations or of helmet geometry.

In other applications it is also preferable that the additional reinforcing areas concentrate around the openings and in the areas of greater mechanical stress.

It is to be understood that any offered value interval may not be optimal in its end values and can require adaptations of the invention so that said end values will be applicable, said adaptations being within the reach of a skilled artisan.

Other features of the invention will appear in the following detailed description of an exemplary embodiment.

### Brief description of the drawings

The above and other advantages and features will be more completely understood from the following detailed description of an exemplary embodiment with reference to the attached drawings, which must be interpreted in an illustrative and non-limiting manner, in which:
Fig. 1 shows a perspective view of an exemplary embodiment of the proposed casing that, in this example, is a helmet shell;
Fig. 2 shows a perspective view of a detail of the composition of the proposed casing, wherein different elements are shown that constitute said casing, according to a preferred exemplary embodiment.
Fig. 3 shows a perspective view of a roller-skating boot incorporating the proposed casing.
Fig. 4 corresponds to an equivalent perspective view of ice-skating boot incorporating the proposed casing.
Fig. 5 shows a suitcase including in its walls the proposed casing.

### Detailed description of an exemplary embodiment

The attached figures show in an illustrative, non-limiting manner exemplary embodiments of the present invention, consisting of a rigid hollow protection casing 30.

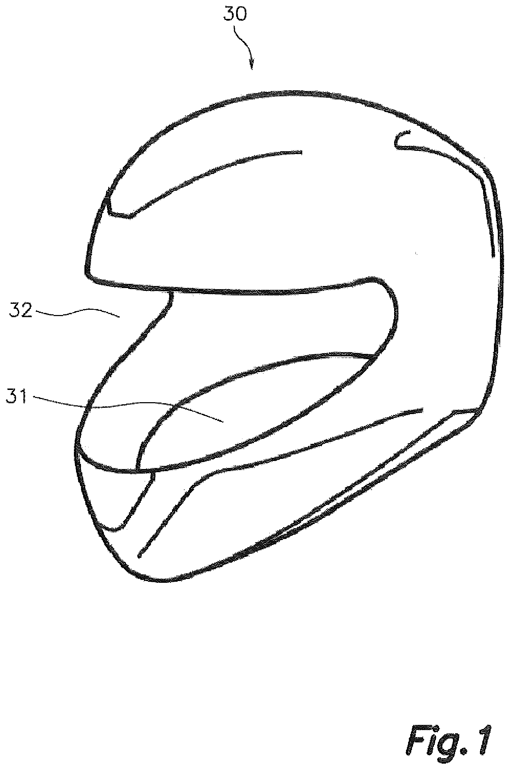

Fig. 1 shows a first exemplary embodiment according to which casing 30 is a helmet which include a shell provided with an access opening 31, intended for the insertion of the user's head within the shell, and a visor opening 32, intended so that the user has good visibility therethrough.

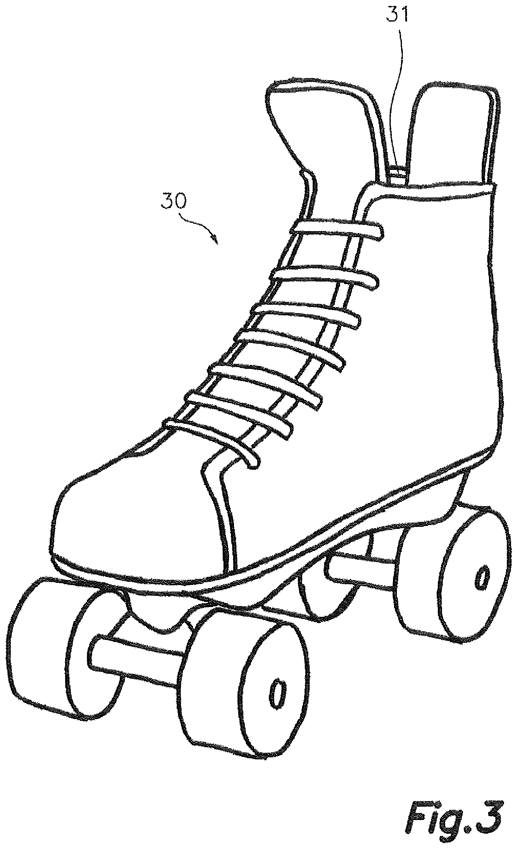

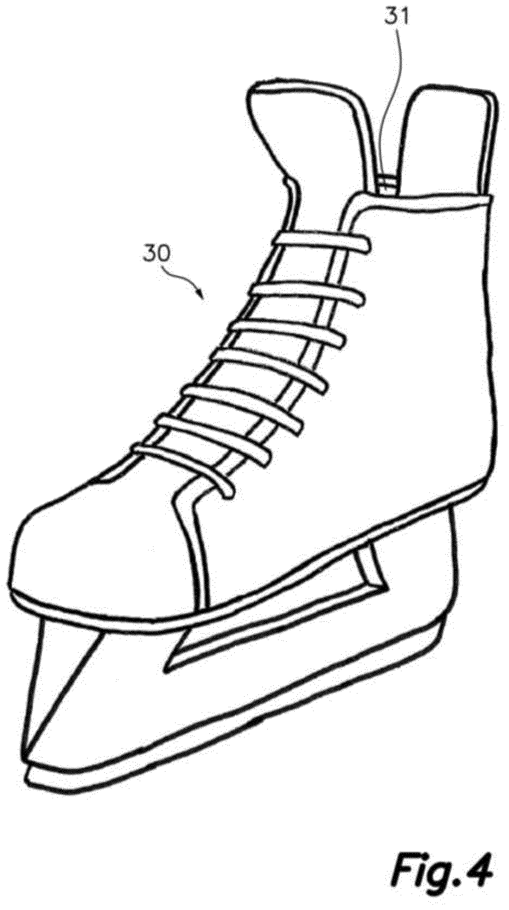

Figs. 3 and 4 shows other alternative embodiments according to which the casing 30 is a roller skate boot or an ice skate boot which include a shell provided with an access opening 31, intended for the insertion of the user's foot within the shell, said shell surrounding and protecting the foot. Some parts of the boot will be made of other materials such textile materials.

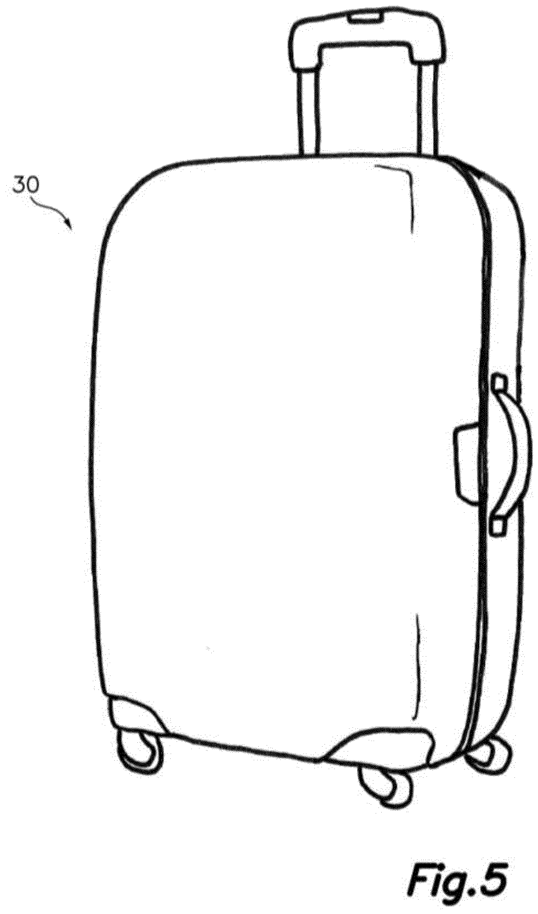

Fig. 5 shows another alternative embodiment according to which the casing 30 is a shell constitutive of a suitcase.

Other embodiments of the proposed rigid hollow casing that are also contemplated, although not shown in the attached figures, are boots, ankle braces, knee pads, elbow pads, wrist protectors, body armours or even cases or covers.

In the case of the casing 30 being a shell of a helmet, both the access opening 31 and the visor opening 32 usually have a smaller size than the maximum dimension of the hollow interior of the shell, so that the manufacturing of said shell requires complex exterior moulds and interior moulds that are also complex that allow for their expansion and/or inflatable interior moulds.

The same happens with other previously cited applications of the casing 30, in which the access opening to its hollow interior is smaller than the maximum interior dimension, also requiring complex moulds for its manufacturing.

The material which conforms said casing 30 consists of a first layer 10 composed of a matrix of a first thermoplastic material 11 consisting in doped polypropylene (with additives to improve its resistance to impact and ultraviolet radiation and to improve its fluidity in the molten state).

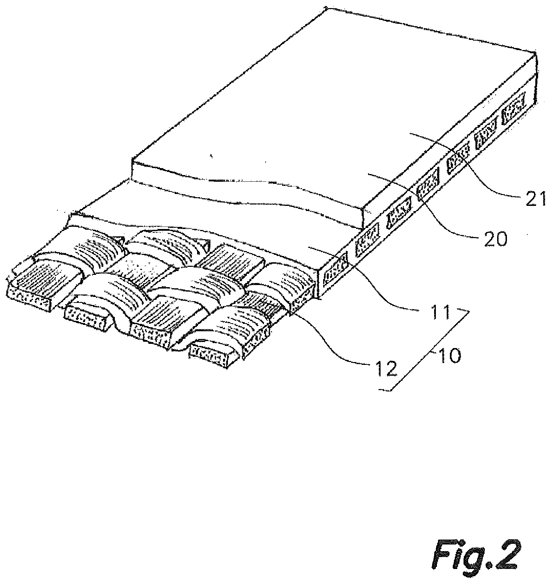

Included in said matrix of the first thermoplastic material 11, there is at least one layer 12 of fabric of woven long fibres, forming strips of fabric such as those shown in Fig. 2.

The fabric strips are distributed covering all of the surface of the casing 30 with at least one layer of said fabric. In some reinforcing areas, several overlapping layers of fabric are included to increase the resistance of said reinforcing areas. In the case that the casing 30 is a shell, said reinforcing areas will correspond with at least the periphery of the access opening 31 and of the visor opening 32, while in other applications of the casing 30 said reinforcing areas will also correspond in adjacent areas of any opening they contain.

The total weight of the reinforcing long fibres 12 will represent at least 45% of the weight of the first layer, and at most 65%, the rest of the weight corresponding to the first thermoplastic material 11.

The fabric formed by said long fibres 12 will be centred with respect to the thickness of the first layer 10, that is, it will have a coating of a first thermoplastic material 11 of equal or similar thickness on both sides.

In another embodiment, not shown, the long fibres 12 are arranged in the shape of an unwoven fabric, randomly intertwined, thereby achieving an effect similar to that obtained with the woven fibres.

The presence of the long fibres 12 embedded in the first thermoplastic material 11 can produce flaws in the surface finish of the first layer 10 of the shell; so, it is proposed to include a second layer 20 of exterior coating integrally composed of a matrix of a second thermoplastic material 21, which in the present example it is proposed that it also be polypropylene, lacking reinforcing fibres, the second layer representing at most 10% in weight of the total of the shell and at least 2%.

A second embodiment will be identical to the first embodiment but replacing the first material 10 or the second material 20 by a polyethylene, which will have a lower melting point than the polypropylene.

A third proposed embodiment will also be identical to the first embodiment but using polyethylene as the first material and the second material, both requiring a lower melting point.

Alternatively, it is contemplated that polypropylene may be used as the first material and polyethylene terephthalate as the second material or use polyethylene terephthalate both as the first material and as the second material.

According to another embodiment, one or both materials can be polyamides.

Additionally, it is contemplated that both the first thermoplastic material and the second one 11, 21 may include a low percentage of graphene particles or fibres as an additive that increase the resistance of the shell.

Regardless of the product used as first and second thermoplastic materials 11, 21, it will be convenient that both materials have a different melting point, which can be achieved with additives or with the selection of said materials. This allows a more controlled manufacturing process and an improved integration of the layers.

Any of the items explained can be manufactured by defining the casing of the same in a mold inside which is included an inflatable bag that presses against the inner wall of the casing. In addition, means of heating of the mould or the arrangement of the mould assembly with the inflatable bag inside a heating oven are provided.

## Claims

1. A rigid hollow protection casing (30) comprising
a first rigid layer (10) composed of a matrix of a first thermoplastic material (11); and
a second overlapping rigid layer (20) exterior to the first layer (10), composed of a matrix of a second thermoplastic material (21),
**characterized in that**
said matrix of first thermoplastic material (11) includes at least one layer of long-fibre fabrics (12) embedded in its interior, said long fibres (12) are selected from fibreglass, carbon fibre and/or aramid fibre and comprise between 45% and 65% in total weight of the first layer (10);
the second layer (20) coats completely one exterior side of the first layer, comprises between 2% and 10% of the total weight of the casing (30) and is entirely composed of said second thermoplastic material (21) lacking long-fibre fabrics (12), providing a smooth finish to the casing (30).

2. The rigid hollow casing according to claim 1, wherein the first thermoplastic material (11) is polypropylene, polyethylene, polyethylene terephthalate or polyamide and the second thermoplastic material (21) is polypropylene, polyethylene, polyethylene terephthalate or polyamide.

3. The rigid hollow casing according to claim 1 or 2, wherein the first thermoplastic material (11) and the second thermoplastic material (21) are plastic materials with different melting points.

4. The rigid hollow casing according to claim 1 or 2, wherein the first thermoplastic material (11) and the second thermoplastic material (21) are the same plastic material.

5. The rigid hollow casing according to any of the previous claims, wherein said long-fibre fabrics (12) are unwoven fabrics.

6. The rigid hollow casing according to any of the previous claims 1 to 4, wherein the long-fibre fabrics (12) are woven fabrics.

7. The rigid hollow casing according to any of the previous claims, wherein the long fibres (12) are sized.

8. The rigid hollow casing according to any of the previous claims, wherein the first thermoplastic material (11) and/or the second thermoplastic material (12) include graphene particles or fibres.

9. The rigid hollow casing according to any of the previous claims, wherein the at least one long-fibre fabric layer (12) is centred relative to the thickness of the first layer (10), having an identical coating thickness of the first thermoplastic material (11) on both sides.

10. The rigid hollow casing according to any of the previous claims, wherein the first layer (10) includes additional reinforcement areas with a number of long-fibre fabric layers (12) greater than the rest of the first layer (10).

11. The rigid hollow casing according to claim 10, wherein the casing (30) is a helmet shell in the shape of a hollow body with an access opening (31) for the insertion of the user's head inside the shell and a visor opening (32), and wherein the additional reinforcement areas include areas of the shell around the visor opening (32) and areas around the access opening (31).

12. The rigid hollow casing according to any of the previous claims 1 to 10, wherein the casing (30) is selected from:
• a helmet shell with an access opening (31) for the insertion of the user's head and with a visor opening (32)
• a body armour, knee pads, elbow pads, wrist protectors, shoulder pads or other personal protection equipment
• boots and skates
• suitcases
• vehicle, aircraft or watercraft components
• racquets
• bicycle frames
• skis and snowboards
• surfboards, wakeboards and other aquatic sports
• wind turbine components.

## Patentansprüche

1. Steife hohle Schutzhülle (30), Folgendes umfassend:
eine erste steife Schicht (10), die aus einer Matrix aus einem ersten thermoplastischen Material (11) besteht; und
eine zweite überlappende steife Schicht (20) außerhalb der ersten Schicht (10), die aus einer Matrix aus einem zweiten thermoplastischen Material (21) besteht,
dadurh gekennzeichnet, dass
die Matrix aus dem ersten thermoplastischen Material (11) mindestens eine Schicht aus Langfaserstoffen (12) einschließt, die in ihr Inneres eingebettet sind, wobei die Langfasern (12) aus Glasfaser, Kohlefaser und/oder Aramidfaser ausgewählt sind und zwischen 45 % und 65 % des Gesamtgewichts der ersten Schicht (10) umfassen;
die zweite Schicht (20) eine Außenseite der ersten Schicht vollständig bedeckt, zwischen 2 % und 10 % des Gesamtgewichts der Hülle (30) umfasst und vollständig aus dem zweiten thermoplastischen Material (21) ohne Langfaserstoffe (12) besteht, wodurch eine glatte Oberfläche der Hülle (30) bereitgestellt wird.

2. Steife hohle Hülle nach Anspruch 1, wobei das erste thermoplastische Material (11) Polypropylen, Polyethylen, Polyethylenterephthalat oder Polyamid ist und das zweite thermoplastische Material (21) Polypropylen, Polyethylen, Polyethylenterephthalat oder Polyamid ist.

3. Steife hohle Hülle nach Anspruch 1 oder 2, wobei das erste thermoplastische Material (11) und das zweite thermoplastische Material (21) Kunststoffmaterialien mit verschiedenen Schmelzpunkten sind.

4. Steife hohle Hülle nach Anspruch 1 oder 2, wobei das erste thermoplastische Material (11) und das zweite thermoplastische Material (21) das gleiche Kunststoffmaterial sind.

5. Steife hohle Hülle nach einem der vorhergehenden Ansprüche, wobei die Langfaserstoffe (12) Vliese sind.

6. Steife hohle Hülle nach einem der vorhergehenden Ansprüche 1 bis 4, wobei die Langfaserstoffe (12) gewebte Stoffe sind.

7. Steife hohle Hülle nach einem der vorhergehenden Ansprüche, wobei die Langfasern (12) geschlichtet sind.

8. Steife hohle Hülle nach einem der vorhergehenden Ansprüche, wobei das erste thermoplastische Material (11) und/oder das zweite thermoplastische Material (12) Graphen-Teilchen oder -Fasern einschließt.

9. Steife hohle Hülle nach einem der vorhergehenden Ansprüche, wobei die mindestens eine langfaserige Stoffschicht (12) in Bezug auf die Dicke der ersten Schicht (10) zentriert ist und auf beiden Seiten eine identische Beschichtungsdicke des ersten thermoplastischen Materials (11) aufweist.

10. Steife hohle Hülle nach einem der vorhergehenden Ansprüche, wobei die erste Schicht (10) zusätzliche Verstärkungsbereiche mit einer Anzahl von langfaserigen Stoffschichten (12) einschließt, die größer ist als der Rest der ersten Schicht (10).

11. Steife hohle Hülle nach Anspruch 10, wobei die Hülle (30) eine Helmschale in Form eines Hohlkörpers mit einer Zugangsöffnung (31) zum Einführen des Kopfes des Benutzers in die Schale und einer Visieröffnung (32) ist, und wobei die zusätzlichen Verstärkungsbereiche Bereiche der Schale um die Visieröffnung (32) und Bereiche um die Zugangsöffnung (31) einschließen.

12. Steife hohle Hülle nach einem der vorhergehenden Ansprüche 1 bis 10, wobei die Hülle (30) ausgewählt ist aus:
• einer Helmschale mit einer Zugangsöffnung (31) zum Einführen des Kopfes des Benutzers und mit einer Visieröffnung (32);
• einem Körperpanzer, Knieschonern, Ellbogenschonern, Handgelenkschonern, Schulterschonern oder einer anderen persönlichen Schutzausrüstung;
• Stiefel und Schlittschuhe;
• Koffern;
• Teile von Fahrzeugen, Flugzeugen oder Wasserfahrzeugen;
• Schläger;
• Fahrradrahmen;
• Skier und Snowboards;
• Surfbretter, Wakeboards und andere Bretter für Wassersportarten;
• Bestandteile von Windkraftanlagen.

## Revendications

1. Une calotte de protection creuse rigide (30) comportant
une première couche rigide (10) composée d'une matrice d'un premier matériau thermoplastique (11) ; et
une deuxième couche rigide de recouvrement (20) extérieure à la première couche (10) composée d'une matrice en un deuxième matériau thermoplastique (21),
**caractérisée en ce que**
cette matrice en premier matériau thermoplastique (11) comprend au moins une couche de tissu à longues fibres (12) noyée à son intérieur, ces longues fibres (12) sont sélectionnées entre la fibre de verre, fibre de carbone et/ou fibre d'aramide et comportent de 45 à 65% du poids total de la première couche (10) ;
la deuxième couche (20) recouvre complètement un côté extérieur de la première couche, comporte de 2 à 10% du poids total de la calotte (30) et est entièrement composée de ce deuxième matériau thermoplastique (21) sans tissus à fibres longues (12) offrant un fini lisse à la calotte (30).

2. La calotte creuse rigide conformément à la revendication 1, dans laquelle le premier matériau thermoplastique (11) est le polypropylène, le polyéthylène, le téréphtalate de polyéthylène ou le polyamide et le deuxième matériau thermoplastique (21) est le polypropylène, le polyéthylène, le téréphtalate de polyéthylène ou le polyamide.

3. La calotte creuse rigide conformément à la revendication 1 ou 2, dans laquelle le premier matériau thermoplastique (11) et le deuxième matériau thermoplastique (21) sont des matières plastiques ayant des points de fusion différents.

4. La calotte creuse rigide conformément à la revendication 1 ou 2, dans laquelle le premier matériau thermoplastique (11) et le deuxième matériau thermoplastique (21) sont la même matière plastique.

5. La calotte creuse rigide conformément à une quelconque des revendications précédentes, dans laquelle ces tissus à fibres longues (12) sont des tissus non-tissés.

6. La calotte creuse rigide conformément à une quelconque des revendications précédentes 1 à 4, dans laquelle ces tissus à fibres longues (12) sont des tissus tissés.

7. La calotte creuse rigide conformément à une quelconque des revendications précédentes, dans laquelle ces fibres longues (12) sont apprêtées.

8. La calotte creuse rigide conformément à une quelconque des revendications précédentes, dans laquelle le premier matériau thermoplastique (11) et/ou le deuxième matériau thermoplastique (12) comprend des particules ou des fibres de graphène.

9. La calotte creuse rigide conformément à une quelconque des revendications précédentes, dans laquelle au moins une couche de tissu à fibres longues (12) est centrée par rapport à l'épaisseur de la première couche (10), ayant une épaisseur de recouvrement identique du premier matériau thermoplastique (11) sur les deux côtés.

10. La calotte creuse rigide conformément à une quelconque des revendications précédentes, dans laquelle la première couche (10) comprend des régions de renforcement complémentaires ayant un nombre de couches de tissu à fibres longues (12) plus grand que le reste de la première couche (10).

11. La calotte creuse rigide conformément à la revendication 10, dans laquelle la calotte (30) est une coque de casque en forme de corps creux ayant une ouverture d'accès (31) pour l'insertion de la tête de l'utilisateur à l'intérieur de la coque et une ouverture de visière (32) et dans laquelle les régions de renforcement complémentaires comprennent des régions de la coque autour de l'ouverture de visière (32) et des régions autour de l'ouverture d'accès (31).

12. La calotte creuse rigide conformément à une quelconque des revendications précédentes 1 à 10, dans laquelle la calotte (30) est sélectionnée entre :
• une coque de casque ayant une ouverture d'accès (31) pour l'insertion de la tête de l'utilisateur et ayant une ouverture de visière (32)
• un gilet pare-balles, des genouillères, des coudières, des protège-poignets, des épaulettes ou autre équipement de protection personnelle
• des bottes et des patins
• des valises
• des composants de véhicule, avion ou embarcation
• des raquettes
• des cadres de bicyclette
• des skis et des snowboards
• des planches de surf, des wakeboards et autres sports aquatiques
• de composants d'éolienne
